# EUROPEAN PATENT SPECIFICATION

(11) **EP 4 052 167 B1**
(45) Date of publication and mention of the grant of the patent: **28.10.2026**
(21) Application number: 20793735.0
(22) Date of filing: 28.10.2020
(51) Int. Cl.: G06V 20/69

(54) **METHOD FOR GENERATING MODELS TO AUTOMATICALLY CLASSIFY MEDICAL OR VETERINARY IMAGES DERIVED FROM ORIGINAL IMAGES INTO AT LEAST ONE CLASS OF INTEREST**
VERFAHREN ZUR ERZEUGUNG VON MODELLEN ZUR AUTOMATISCHEN KLASSIFIZIERUNG VON AUS ORIGINALBILDERN ABGELEITETEN MEDIZINISCHEN ODER TIERMEDIZINISCHEN BILDERN IN MINDESTENS EINE INTERESSIERENDE KLASSE
PROCÉDÉ DE GÉNÉRATION DE MODÈLES PERMETTANT DE CLASSER AUTOMATIQUEMENT DES IMAGES MÉDICALES OU VÉTÉRINAIRES DÉRIVÉES D'IMAGES ORIGINALES EN AU MOINS UNE CLASSE D'INTÉRÊT

(30) Priority: 31.10.2019 IT 201900020200
(43) Date of publication of application: 07.09.2022
(73) Proprietor: Deeptrace Technologies S.r.l., 20122 Milano (IT)
(72) Inventor: CASTIGLIONI, Isabella, 20122 Milano (IT); INTERLENGHI, Matteo, 20122 Milano (IT); POLIDORI, Annalisa, 20122 Milano (IT); SALVATORE, Christian, 20122 Milano (IT)
(74) Representative: Parisi, Luigi
(86) International application number: PCT/EP2020/080275
(87) International publication number: WO 2021/083954

(56) References cited:
- US-A1- 2017 053 398
- US-A1- 2018 130 207
- ZACH EATON-ROSEN ET AL: "Improving Data Augmentation for Medical Image Segmentation", 6 July 2018 (2018-07-06), XP055709256, Retrieved from the Internet <URL:https://openreview.net/pdf?id=rkBBChjiG> [retrieved on 20200626]

## Description

### FIELD OF THE INVENTION

This invention refers to a method for generating models to automatically classify medical or veterinary images derived from original images into at least one class of interest.

### PRIOR ART

It is known that most complex multifactorial diseases, including, for example, neurodegenerative and oncological diseases, are expressed in different subtypes, called phenotypes, which show different behaviors in their onset, progression and response to different therapeutic options. The identification of phenotypes represents one of the most complex challenges of medical research, but it is of fundamental importance for the personalization of therapy, because it is shown that different phenotypes respond very differently to the same therapy.

To date, the characterization of phenotypes is mainly carried out by means of the analysis of tissue biopsy with immunohistochemical techniques, characterizing, in two-dimensional samples (tissue sections fixed on slide), under the microscope, differences in the microarchitecture of the cells of the tissues where the disease is expressed and measuring some molecular biomarkers. As an example, a brain biopsy allows to determine the accumulation of specific proteins in the tissues and to verify a brain atrophy caused by neuronal death. Also, as an example, a biopsy of abnormal tissue in the breast allows to measure some specific molecules that express themselves differently in distinct subtypes of breast cancer. Immunohistochemistry techniques are based on the principle of antigen-antibody conjugation, according to which an antibody, immunized against the molecule that is looked for, recognizes it in addition with a means of detection (such as an enzyme or a fluorescent molecule) that makes visible under a microscope, by means of a staining, the reaction with the antibody looked for. Similar techniques are fluorescence microscopy (fluorescent molecules) and optical scanning microscopy (colloidal gold). However, these techniques suffer from the fact that the number of molecular biomarkers that can be measured is limited by the experimental approach and by the existence of a chemical detection medium that makes them visible to the light microscope.

In recent years genomics has emerged as the most promising technique to characterize disease phenotypes from a molecular point of view. The identification of activating gene mutations has paved the way for the first applications of genomics in oncology, radically changing the perspectives of study for some subtypes of tumors. In addition, the measurement of expression levels of thousands of genes by means of the new techniques of Next Generation Sequencing (NGS) has allowed, for many diseases, the definition of gene panels able to identify subtypes with different prognosis. However, even genomics, such as histopathological and immunohistochemical analysis, is a technique that involves invasive procedures performed from portions of tissue biopsies, whose results are still limited by the partiality, and sometimes even by regional randomness of the tissue sample taken and analyzed.

In fact, it has been recently shown, on biopsies of solid oncological lesions, that the portrait of the expressed genes and their mutations is strongly dependent on the sampling site, and that, depending on the region of the biopsy analyzed, the same gene can be expressed in a very different way suggesting opposite directions in therapeutic choices. No less important, the current biopsy analysis is performed on ex vivo tissue, and prevents the study of the phenotype in its microenvironment and living environment.

Diagnostic imaging is a set of techniques by means of which it is possible to observe, non invasively, a region of an organism not visible to the outside. Different are the techniques of diagnostic imaging, depending on the physical principle underlying the acquisition of images. Among these, a particularly important role is played by Computed Tomography (CT), Magnetic Resonance Imaging (MRI), Positron Emission Tomography (PET), and Single Photon Emission Tomography (SPECT). Their use is recommended in the current guidelines of many diseases for diagnosis, including staging in the diagnostic evaluation, for addressing and monitoring therapy, and for the definition of the treatment plan in radiotherapy. In some of these techniques, specifically CT and MRI, biochemical agents are also available as contrast agents (e.g. barium, iodine, gadolinium) that can modify the way a region of the body appears in an image, improving its reading, in particular by accentuating tissue and vascularization differences.

Although the spatial resolution of these systems is much lower than that of microscopes, some of these technologies have significantly improved in recent years their performance in terms of signal-to-noise ratio on images, proving capable of capturing morphological and functional heterogeneity of the tissues studied, to the point of reducing by half the amount of contrast medium.

As an example, using CT or MRI images without contrast medium it is now possible to observe lesions of the order of a few mm, with infiltrations or necrosis inside the tissue, and it is possible to see any irregularities of shape. By means of PET images, depending on the radiopharmaceutical used, it is possible to see the expression of specific tissue functions, such as, for example, cellular glucose metabolism or the expression of particular receptors.

However, the observation of these images by medical specialists is still very limited by the human response to reading the images. If the data structure of a CT, MRI or PET image is able to quantify more than 65,000 levels of signal intensity, however, it must be considered that humans can distinguish less than 20 levels of gray intensity in an image; their ability to capture quantitative differences in tissue architecture and morphology on these images is very limited.

US 2018/130207 A1 is relevant prior art and discloses a system and method for non-invasive tissue characterization and classification through computational biopsy.

One aim of the present invention is to overcome the technical problems of histopathological-immunohistochemical analyses and of genomic analyses carried out on ex vivo biopsies, also taking into account the fact that these analyses, besides being particularly invasive both in man and animal, can lead to partial results.

Taking advantage of the benefits offered by the current quantitative techniques of diagnostic imaging, the invention aims to enhance its performance in terms of images by means of a processing method capable of changing the way in which a region of the body appears in such images, expressing, in tissues (and/or tissue functions) of organs or any other structure or body part, in the presence or absence of pathology, characteristics such as to make visible on the processed images information that would otherwise not be appreciable or perceivable to the naked eye, displaying them with "virtual contrast media".

Taking advantage of this new ability, the invention allows to realize "virtual biopsies" of tissues (and/or tissue functions) of organs or any other structure or body part, in the presence or absence of pathology, as digital surrogates of real biopsies measuring levels of expression of their architectural, morphological and functional complexity not appreciable to the naked eye.

A further aim of the invention is to provide the possibility to use such virtual biopsies to realize advanced predictive models of automatic image classification of virtual biopsies, incorporating, within the classifiers, methods of data selection, training and validation superior to those of known automatic classifiers applied to the image sector, by means of the integration of innovative procedures aimed at
1) overcome the practical difficulties of performing diagnostic studies for repeated imaging over time, the comparison of which is used to ensure reliable analysis of virtual biopsies;
2) harmonize the methods of analysis of different virtual biopsies to ensure a stable measurement compared to different medical imaging systems and different methods of virtual biopsy generation.

A further goal is to enhance and make available to the physician a variety of information originally contained in medical images in standard format.

A further purpose of the invention is to avoid, or at least significantly reduce, the use of real contrast media.

### BRIEF DESCRIPTION OF THE INVENTION

These goals are achieved by a method as described in the present invention.

For a better understanding of the invention, it should be noted, however, that in the context of this description and of the enclosed drawings, the term "virtual biopsy" is used solely as a metaphor to indicate the action of extracting, from medical or veterinary images of the body, of an organ or any other human or animal body structure or part, portions of images representing tissue partitions, or tissue functions, on which to perform analysis in order to characterize such tissue partitions or tissue functions.

This has the consequence that with the term "virtual biopsy" in this description, no action is represented that involves any real physical removal of any portion or fragment of tissue either in man or animal.

Rather with the term "virtual biopsy" associated with tissues (and/or tissue functions) of organs or any other structure or body part, in the presence or absence of pathology, it is meant a complex of processing carried out on original medical or veterinary images, where such processing is designed to make recognizable, by one or more computers, or by a human operator, significant characteristics implicitly present in the original images.

These elaborations, as better illustrated below, operate as digital surrogates of new biopsies, measuring levels of expression of their architectural, morphological and functional complexity not appreciable to the naked eye.

The images can be in a standard medical format and can be three-dimensional (3D) or two-dimensional (2D) images.

Moreover, in the present description the term "virtual contrast medium" is used as metaphor to represent the concept to simulate an administration finalized to visualize, on said defined virtual biopsy, the results of the elaborations.

The consequence of this is that the term "virtual contrast medium" does not represent any action involving any real physical administration of any biochemical agent either in humans or animals. Rather with the term "virtual contrast medium" it will be understood in the present description the result of elaborations carried out by means of computers or networks of computers on medical or veterinary images, said elaborations being finalized to associate to such images numerical values representative of the intensity of expression of a determined characteristic in such a way that it is interpretable from a computer, a network of computers or a human operator.

The invention has as its object a method for the generation of models to automatically classify in at least one class of interest medical or veterinary images derived from original images, where said method is implemented by means of computers or computer networks and wherein said method includes at least the following steps:
- selection of at least one class of interest;
- construction of a database containing a plurality of data structures representative of derived medical or veterinary images, said data structures being generated by processing of original medical or veterinary images, wherein said data structures are processed in such a way that they can be used as a surrogate for real biopsies performed with real contrast media,
- association to the classes of interest of said data structures that can be used as a surrogate for real biopsies performed with real contrast media;
- training of at least one model using said data structures in order to train said model, on the basis of the differences in the levels of expression of characteristics highlighted in said data structures, to classify each of said derived images in one or more classes of interest.

Among the advantages of this embodiment is the fact that the models produced by the invention can be used as automatic predictive models of virtual biopsy image classes.

The expression levels selected by the automatic classifiers can be used as predictors of virtual biopsy image classes, which can be displayed using virtual contrast media.

One aspect of the invention provides for, in order to generate derived medical or veterinary images that can be used as a surrogate for real biopsies performed with real contrast media, at least the following steps:
- receive at least one original medical or veterinary image, wherein the original medical or veterinary image is represented by an original data structure in a standard medical or veterinary format;
- partition said image into classes of interest, said classes of interest being representative of different tissues or tissue functions of one or more body organs;
- generate from each of said classes of interest a corresponding derived data structure that can be stored in a standard medical or veterinary format, where the derived data structure contains data representative of tissue intensity values or function of the partitioned tissue;
- generate for each of said derived data structures a plurality of variants (N) by combined manipulations of the original and representative medical or veterinary image data structure and the derived data structure, by means of operations chosen from statistical elaborations, rotations, translations and rototranslations of medical or veterinary images and elastic and inelastic deformations of the partition or partitions representative of different tissues or functions of tissues of one or more body organs;
- measure, for each of the variants of the generated plurality of variants (N), corresponding levels of expression of the characteristics of the tissue or the function of the tissue expressing local differentiations in the micro-architecture of the tissue or in the functional signal of the tissue, irregularities in the shape and anomalies in the size of the tissue or combinations or elaborations of these characteristics;
- extract a plurality of statistical measurements from a co-occurrence matrix of the histogram of image oriented gradients;
- generate a data structure aimed at making recognizable by the computer or computer network significant characteristics implicitly present in the original images, by association of a numerical value to each characteristic, said numerical value being representative of the level of intensity of expression of said characteristic.

More in detail, the method of the invention is able to generate predictive models to automatically classify in at least one class of interest medical or veterinary images derived from original images, wherein said derivation is finalized to make detectable to a computer and to a human operator, predictive characteristics, implicitly present in the original images, not perceivable by the naked eye, making them visible and interpretable to the naked eye on images derived, wherein said method is implemented by means of computers or of computer networks and wherein said method includes at least the following steps:
- selection of at least one class of interest wherein the classes of interest characterize predictions;
- construction of a database containing a plurality of data structures representative of derived medical or veterinary images, said data structures being generated by processing original medical or veterinary images, in order to extract portions of images representing tissue partitions or tissue functions,
wherein said data structures representative of derived medical or veterinary images are further processed by measuring levels of expression of characteristics implicitly present in the original and derived images that are not perceivable by the naked eye, said characteristics expressing local differences in the micro-architecture of the tissue or in the functional signal of the partitioned tissue, irregularities in the shape and anomalies in the size of the partitioned tissue or combinations or elaborations of these characteristics, so that they can be used as characteristics expressing the architectural, morphological and functional complexity of the tissue partitions, in order to characterize these tissue partitions or tissue functions and usable for surrogate of real biopsy;
- association to said classes of interest of said processed data structures;
- training of at least one predictive model using said data structures elaborated in such a way to train said model to classify each of said data structures in one or more of said classes of interest on the basis of the differences in the distribution of the levels of expression of characteristics measured in said data structures, wherein the statistically significant predictive characteristics of the model are the characteristics resulting from testing their probability of not being random predictors of the model.

According to an embodiment of the present invention, the processing steps of the data structures representative of original medical or veterinary images finalized to making significant characteristics implicitly present in the original medical or veterinary images to make said derived images usable, includes at least the following:
- receive at least one original medical or veterinary image, wherein said original medical or veterinary image is represented by an original data structure in a standard medical or veterinary format;
- partition said image into classes of interest, said classes of interest being representative of different tissues or functions of tissues of body organs;
- generate from each of said classes of interest a corresponding derived data structure that can be stored in a standard medical or veterinary format, wherein the derived data structure contains data representative of tissue intensity values or function of the partitioned tissue;
- generate for each of said derived data structures a plurality of variants (N) by means of combined manipulations of the original data structure, representative of the original medical or veterinary image, and the derived data structure, processed in order to generate a second binary data structure, derived from the previous one, which defines the volume of the partition, obtained by setting to 1 the internal intensity values of the extracted partition and by setting to zero the external intensity values, wherein said variants are generated by means of operations chosen between statistical elaborations, rotations, translations and rototranslations of the images, elastic and inelastic deformations of the volumes, the variants being generated by inducing variations in the intensity values of the original images similar to the variations obtained by acquiring the same image in repeated measurements under conditions of environmental perturbations, and variations in the volumes similar to the variations obtained by different image partitioning methods;
- measure, for each of the variants of the generated plurality of variants (N), corresponding levels of expression of the characteristics of the tissue or the function of the tissue expressing local differentiations in the micro-architecture of the tissue or in the functional signal of the tissue, irregularities in the shape and anomalies in the size of the tissue or combinations or elaborations of these characteristics;
- said measurement being made by extracting a plurality of statistical measurements from a co-occurrence matrix of the histogram of the image oriented gradients;
- assign to each measured characteristic a stability index, calculated as an intra-class correlation coefficient between the expression levels for that characteristic in the 1+N variants generated;
- generate a data structure finalized to make recognizable by the computer or by the network of computers significant characteristics implicitly present in the original images, by means of association of a numerical value to every stable characteristic having said stability index greater than a predetermined numerical value, said numerical value being representative of the level of intensity of expression of said characteristic.

Further characteristics of the invention can be inferred from the employee claims.

### BRIEF DESCRIPTION OF THE FIGURES

Further characteristics and advantages of the invention will be apparent from reading the following description provided by way of non-limiting example, with the aid of the figures illustrated in the enclosed tables, in which:
- Figure 1 is a block diagram that illustrates the main steps at the base of the generation of a virtual biopsy with virtual contrast media, according to an embodiment of the invention;
- Figure 2 is a block diagram that illustrates the main steps at the base of the generation of an automatic predictive model trained on the levels of expression measured by virtual biopsies with virtual contrast media of different classes and identification of predictors, according to a further aspect of the invention;
- Figure 3a shows an example of method implementation in a system using a local platform and Figure 3b shows an example of method implementation using a cloud platform;
- Figures 4a and 4b illustrate examples of original PET-CT medical images of lung tissue used in a first example of the invention method;
- Figures 4c and 4d illustrate color examples of five different characteristics C1, C2, C3, C4 and C5 extrapolated from a first example of the method of the invention and respectively related to the tissues of images 4a and 4b;
- Figures 5a and 5b illustrate examples of implementation of step 5 of Figure 1 of the method in the case of medical PET-CT images of lung tissue;
- Figure 6a illustrates an example of selection of classes of interest and Figure 6b illustrates in color an example of association of virtual biopsies with virtual contrast media to the selected classes;
- figure 6c illustrates an example of a first model of image classification to train according to an embodiment of the invention and figure 6d is a block diagram of some steps of the method of generation of predictive models of the invention;
- Figure 6e illustrates in color as an example, the most predictive characteristics identified by the generated model;
- Figures 7a and 7b illustrate examples of original MRI medical images of brain neurodegeneration used in a second example of the invention method;
- Figures 7c and 7d illustrate color examples of four different characteristics C1, C2, C3 and C4 extrapolated in a second example of the invention method and related to the tissues of images 7a and 7b respectively;
- Figure 8a illustrates a second example of selection of classes of interest and Figure 8b illustrates in color a second example of association of virtual biopsies with virtual contrast media to the selected classes;
- figure 8c illustrates an example of a second model of image classification to be trained according to an embodiment of the invention and figure 8d is a block diagram of some steps of the method of generation of predictive models of the invention; and
- Figure 8e illustrates in color as an example, the characteristics with greater predictivity identified by the second generated model.

### DETAILED DESCRIPTION OF THE FIGURES

The present invention will now be described with particular reference to the enclosed figures.

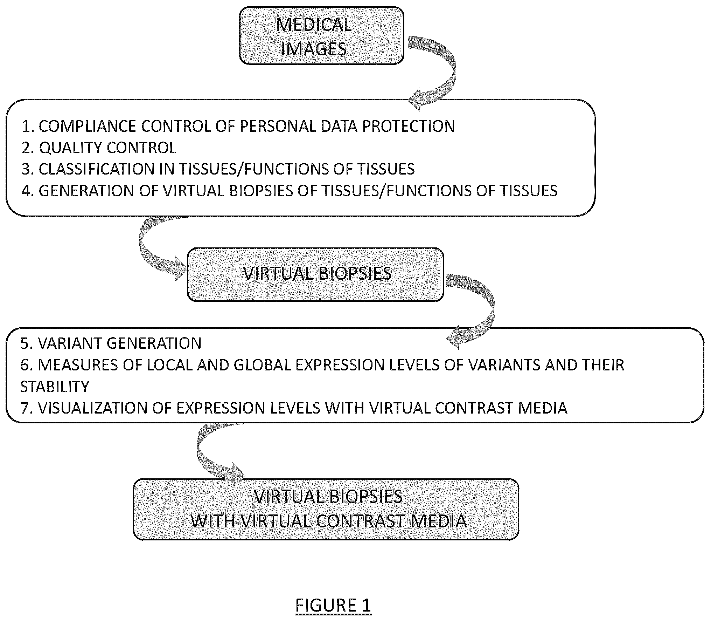

In particular, figure 1 shows the main steps at the base of the generation of a virtual biopsy with virtual contrast media, according to an embodiment of the invention.

The medical images referred to in Fig. 1 and from which the virtual biopsy is generated are obtained by the known techniques CT, MRI, optionally, also following the administration of a contrast medium with biochemical agents, and by the known techniques PET and SPECT, in every way of image acquisition and reconstruction, made possible by said technologies, which allow the image reconstruction of tissues (and/or tissue functions) of organs or any other structure or body part, in the presence or absence of pathology. Among the acquisition modes for PET are included: static or dynamic acquisition modes following the administration of any radiopharmaceutical; for MR: structural, functional, diffusion, perfusion, magnetic susceptibility, angiography acquisition modes; optionally in combination with each other, in single mode or in modes already integrated during the image acquisition phase (hybrid systems, including: PET-TC, SPECT-TC, PET-SPECT, PET-MRI).

The method according to the various embodiments of the invention uses any data structure containing numerical formats of medical images, including data structures consisting of one or more "headers" and of 2D matrices of numbers in binary format that define the 2D or 3D image of a human or animal subject as a succession of images whose technical and procedural information related to the human or animal subject (e.g. weight and height and any dose and residue of radiopharmaceutical or real contrast medium administered), and the acquisition and reconstruction of its images, are described in the "header" or associated "headers".

These data structures are available in several standard formats known for medical imaging, in particular DICOM (Digital Imaging and Communications in Medicine) and NIFTI (Neuroimaging Informatics Technology Initiative) formats, at local PACS (Picture Archiving and Communication System) repositories of hospital and research facilities acquiring diagnostic imaging studies and at other repositories, including distributed repositories supporting such formats.

A first step of the method is indicated in figure 1 (step 1) with the expression Personal data protection compliance control and concerns the deletion of data that allow the direct identification of the subject (including personal data) and electronic communication data (including e-mail, telephone), data that are not used by the method described in the invention. This process can be carried out by means of various known methods, to ensure the compliance of data processing with national and international regulations on the protection of personal data, for example, by directly deleting such data in the header of the data structure.

A second step indicated in figure 1 as step 2, that is Quality Control, concerns the control of the completeness of the data structure associated with medical or veterinary images. The number of images, the sequence of images with respect to the number and sequence indicated in the header and the size of the image data structures are checked. In the case of PET images, the presence of the dose data and the radiopharmaceutical residue administered and the time of administration, necessary to measure the image data in Standardized Uptake Value (SUV) units, is checked.

A third step (Figure 1, step 3 - Classification in tissues/tissue functions) is the step that allows to partition medical or veterinary images into multiple classes of tissues (and/or tissue functions) of organs or any other structure or body part, in the presence or absence of pathology, on which to virtually mimic a biopsy by simulating the action of extracting, from medical or veterinary images, portions of images representing a tissue partition, or tissue function, on which to perform analysis in order to characterize said tissue partition or tissue function.

Among the automatic classification procedures can be used, optionally, not exhaustively, threshold algorithms, also adaptive, supervised classification algorithms (e.g. minimum distance, maximum likelihood, Bayesian estimators, Markov fields, machine learning algorithms such as deep neural networks, convolutional neural networks), unsupervised classification algorithms (e.g. k-means, Bayesian estimators without ground-truth, kernel-based density estimators, various types of autoencoders), and object-oriented classification algorithms (e.g. edge detection by gradient, Laplacian operators, oriented operators, Roberts operators, Previt, Sobel, watershed algorithms).

Alternatively and optionally, the partitioning of the medical or veterinary image into multiple classes of tissues (and/or tissue functions) of organs or any other structure or body part, in the presence or absence of pathology, can be performed by an experienced operator by means of the use of tools with dedicated graphical interfaces, either by manually contouring the classes of interest on medical or veterinary images or by manually editing the contours of the automatically classified classes.

A fourth step (figure 1, step 4) is the Generation of virtual tissue biopsy/tissue function, i.e. the process of generating the virtual biopsy of a tissue/tissue function. For each class of tissue/tissue function partitioned in medical or veterinary images, a data structure is generated in the same standard format as the medical images from which it is derived, i.e. a derived image is generated, with the intensity values of the partitioned tissue/tissue function, and a record is generated that includes this data structure.

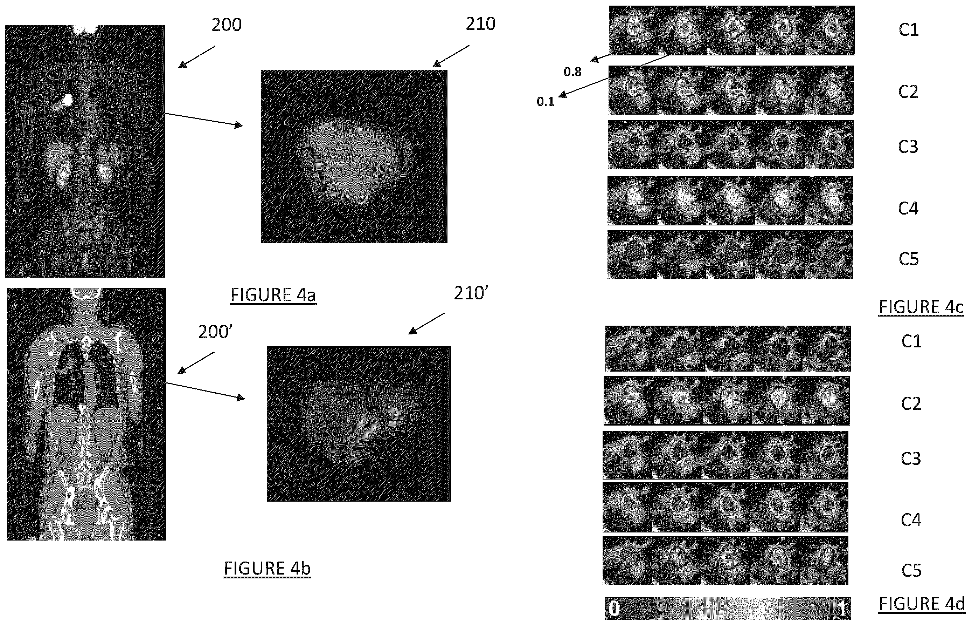

In particular in figure 4a is visible a first example consisting of an original PET/CD 200 image from which a first detail is extracted, that is an image of a metabolically active lung tissue 210, where said image is subjected to the steps of the method of the invention.

In particular in figure 4b it is visible a second example consisting of an original PET/CD 210 image from which a second detail is extracted, that is an image of a lung tissue of increased density 210', where also this image is subjected to the steps of the method of the invention.

The fifth step of the method (Figure 1, step 5 - Variant Generation) is the process that guarantees a reliable and robust analysis of virtual biopsies. For every original image (for example the images 210 and 210' of the figures 4a and 4b) N variants are generated starting from the original partitioned one, up to some hundred, by means of a series of manipulations of the image of the original virtual biopsy (created by means of the step 4) and of a second binary image (0-1), derived from the previous one, called "mask", obtained setting to zero the values of intensity of the image of the virtual biopsy external to the contour and putting to 1 the values of intensity internal to the contour. The generated variants induce variations in the intensity values of the virtual biopsy image data structures that simulate measurements of repeated biopsies over time and biopsies virtually generated by different classification methods, including different manual contours or manual changes of contours obtained by automatic classification. For this purpose, rotations, translations, rototranslations of virtual biopsy images and rotations, translations, rototranslations and elastic and inelastic deformations of binary contour masks can be performed.

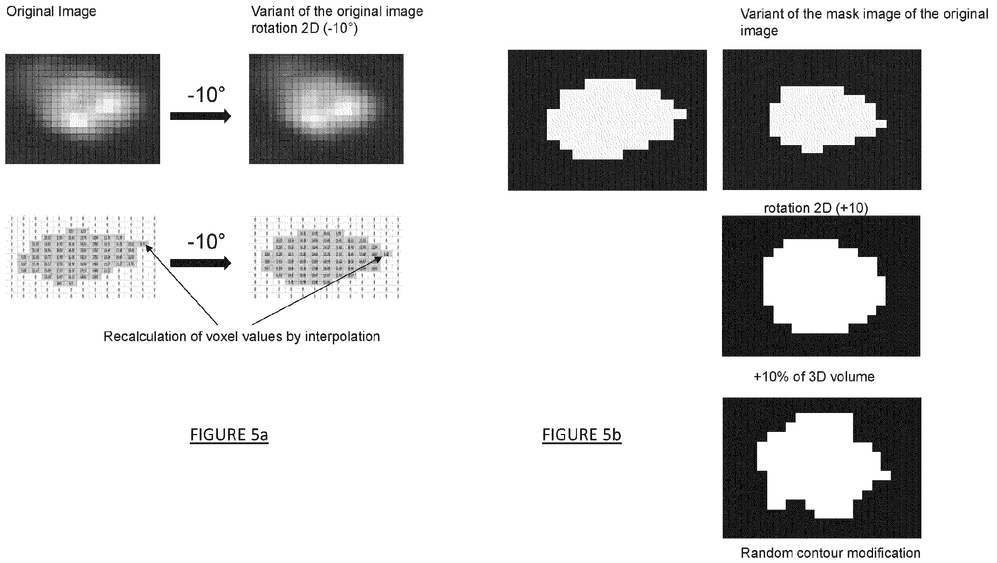

In particular in figure 5a it is visible, as an example, one of the many possible manipulations of the original image, i.e. a rotation of the same by an angle of -10° for which a recalculation of the voxel values of said image is performed by interpolation.

Figure 5b shows, as an example, some manipulations of the mask image of the original image, i.e. a +10° rotation, a 10% volume increase and a random modification of the contour.

A sixth step (Figure 1, step 6 - Measurements of local and global expression levels of variants and their stability) is the process of measuring the levels of expression of tissue characteristics, or tissue function, suitable to express, for example, local differentiations in the micro-architecture of the tissue or in the functional signal of the tissue, irregularities in the shape and anomalies in the size of the tissue, or suitable to express in a simplified way, their complexity.

For the original image and for each of these variants (1+N), local and global expression levels of a multiplicity of characteristics (up to a few thousand) are measured.

For this purpose, a series of statistical measurements are extracted from the histogram of oriented gradients, in particular from the co-occurrence matrix of the image oriented gradient histogram.

Among the characteristics that can be measured, optionally, but not exhaustively, there are also: signal intensity levels, measurements derived from their gradients, statistical measurements obtained from their distributions, morphological measurements, statistical measurements obtained from the histogram of intensities, weaving measurements obtained by means of statistical methods of the second order. It is also possible to measure, optionally, not exhaustively, measurements obtained by convolutions with Gabor filters.

It is also possible to measure optionally, not exhaustively, characteristics extracted by filtering techniques with the use of different filters, among which, for example, exponential, logarithmic, laplacian, gaussian filters.

In addition, characteristics extracted by analysis of the main components (PCA) or by analysis of the partial least squares (PLS) can be optionally measured.

Optionally, not exhaustively, characteristics extracted from convolutional neural networks or other machine learning and deep learning algorithms can also be measured.

To each measured characteristic is assigned a stability index, for example in terms of intra-class correlation coefficient (ICC), obtained by comparing the results of expression levels obtained for that characteristic in the 1+N virtual biopsies generated.

For example, in figure 4c five different characteristics C1, C2, C3, C4 and C5 are illustrated in color and are related to the metabolically active lung tissue 210 of figure 4:
Characteristic 1 - C1
Gradient intensity = 0.7; ICC = 0.5
Characteristic 2 - C2
Gradient angle = 0.7; ICC = 0.8
Characteristic 3 - C3
Absolute energy based on intensity statistics = 0.4;
ICC = 0.9
Characteristic 4 - C4
Absolute variance based on intensity statistics = 0.2; ICC = 0.9
Characteristic 5 - C5
Non-uniformity in the size of the areas defined by the gray levels = 0.1; ICC = 0.8.

As a further example, in figure 4d the same five different characteristics C1, C2, C3, C4 and C5 are illustrated in color and related to the lung tissue of increased density 210' of figure 4b, which will naturally assume different values in general, in particular:
Characteristic 1 - C1
Gradient intensity = 0.3; ICC = 0.6
Characteristic 2 - C2
Gradient angle = 0.2; ICC = 0.7
Characteristic 3 - C3
Absolute energy based on intensity statistics = 0.4;
ICC = 0.9
Characteristic 4 - C4
Absolute variance based on intensity statistics = 0.7; ICC = 0.8 Characteristic 5 - C5
Non-uniformity in the size of the areas defined by the gray levels = 0.4; ICC = 0.9.

A seventh step (Figure 1, step 7 - Visualization of stable expression levels with virtual contrast media) is the process of visualization of expression levels on virtual biopsies using virtual contrast media.

To each expression level is associated a virtual contrast medium that "colors" the characteristic expressed according to its normalized level, as for example indicated by the colors of the figures 4c and 4d. Such scale of colors makes appreciable to the human eye the variations of the single characteristics expressed at local level.

For each virtual biopsy generated and analyzed, the method provides a data structure that includes, in particular, the results of the measurements, in terms of expression levels of the measured characteristics and related ICC, and the digital images of the virtual biopsy with specific virtual contrast media to make the expression levels visible.

The data structures generated by the image processing process underlying the invention are proposed as a new image mode, i.e. as surrogates for contrast media for diagnostic imaging techniques. The method also allows the training and generation of new automatic predictive models for the classification of virtual biopsy images and the identification of predictors of the classes measured by means of virtual biopsies.

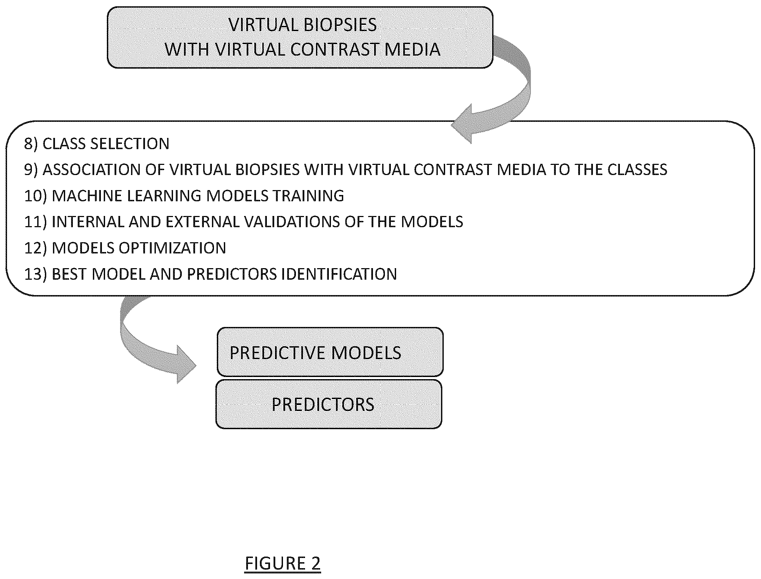

Fig. 2 shows the main steps for the generation of an automatic predictive model trained in a supervised way on the expression levels measured by virtual biopsies with virtual contrast media of different classes.

The initial step of the generation phase of a supervised automatic predictive model is indicated in figure 2 as step 8, i.e. supervised class selection. It consists in the selection of the different classes of interest in order to generate the specific predictive model of classification of the virtual biopsies with virtual contrasts in such classes of interest.

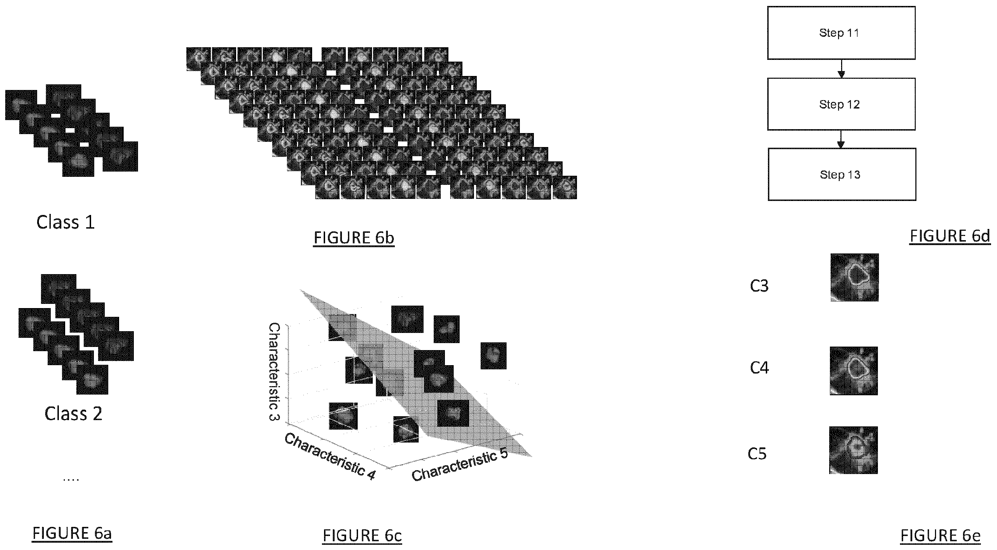

For example, Figure 6a shows the selection of two (or more) classes. This selection can be made in supervised or unsupervised mode.

It can be selected, alternatively, not exhaustively: only one class of interest (in which case the model is associated to the category "unsupervised classifier" or "anomaly detection" or "one class classifier"), two classes of interest (in which case the model is associated to the category "binary classifiers"), more than two classes of interest (in which case the model is associated to the category "multi-group classifier").

The next step (figure 2, step 9 - Association of virtual biopsies with virtual contrast media to classes) consists in associating to each class of interest, selected in the previous process, the corresponding data structure containing the results of the analysis (expression levels) of virtual biopsies with virtual contrast media. At the end of this process, each of the k classes of interest will be characterized by a number n(k) of data structures of virtual biopsies with virtual contrast media.

This phase is also shown schematically in figure 6b.

The next step (figure 2, step 10 - Supervised training of machine learning models) consists in training one or more models using the n(k) data structures with the expression levels of the characteristics extracted from the virtual biopsies belonging to the classes (or class) of interest defined previously.

During this process, one or a set of machine learning algorithms learns, in a supervised or unsupervised way, to separate images of virtual biopsies based on the differences in their expression levels and, subsequently, to classify new virtual biopsies (not used in the training phase) in the classes of interest based on expression levels. Among the supervised learning algorithms can be used, optionally, not exclusively, machine learning algorithms such as Support Vector Machine, Decision Trees, Random Forest, Neural Networks, Convolutional Neural Networks or, more generally, Deep Learning, Linear Regression or Logistics. Among the unsupervised learning algorithms can be used optionally, not exclusively, clustering algorithms, including k-means and hierarchical clustering.

Some sub-processes are carried out with the aim, optionally, not exhaustively, to select the expression levels to be used for the training of the models, in particular:
1) harmonizing the expression levels measured using different medical image acquisition protocols or different systems or acquired in different centers: this sub-process can be performed, optionally, not exhaustively, using techniques to harmonize the averages or medians of the measured expression levels distributions using different image acquisition protocols or different systems or acquired in different centers;
2) extracting the statistically independent characteristics, with greater variance between the classes of interest: this sub-process can be performed, optionally, not exhaustively, using multivariate techniques such as PCA, PLS, or independent component analysis;
3) selecting, among the characteristics extracted in the previous points, the most significant ones from a statistical point of view for the differentiation of classes of interest: this sub-process can be performed, optionally, not exhaustively, using univariate techniques such as Fisher Discriminant Ratio (FDR), Student t-test, Pearson test.

This phase is also illustrated schematically in figure 6c, in which a three-dimensional graph is represented that defines an abstract space determined by the values of the characteristics C3, C4 and C5.

For example a generated model could have equation Y₁ = 1.18X₁ + 1.24X₂ + 0.85, where Y₁ represents characteristic 3, where X₁ represents characteristic 4 and X₂ represents characteristic 5. These values, which define the equation of a plane that separates the abstract space into two regions, are purely illustrative and not limiting the characteristics of the invention.

It is also obvious that in the method of invention, depending on the applications, abstract spaces with n-dimensions, with n greater than 3, can be considered.

Figure 6d summarizes the following steps 11, 12 and 13 of the method of the invention.

The next 11th step (Figure 2, step 11 - Internal and external model validation) consists in measuring the performance of the model(s), based on the comparison of figures of merit that estimate the errors of the model(s), and therefore the related predictive capabilities, in terms of, for example, Accuracy, Sensitivity, Specificity, Area under the Curve - AUC, predictive value of true positives, predictive value of true negatives, F1 score, obtained in the classification of virtual biopsy images derived from medical or veterinary images acquired non-independently (internal validations) and independently (external validations) with respect to the medical images from which the virtual biopsies used to train the model(s) were derived.

For example, the equation Y₁ = 1.18X₁ + 1.24X₂ + 0.85 might have internal AUC = 0.88 and external AUC = 0.85.

A 12-th step (figure 2, step 12 - Optimization of the models) represents the phase of optimization and improvement of the model(s), that happens repeating the steps 10 and 11 in an iterative way, with the addition of other samples of images of virtual biopsies, and/or other characteristics that can improve the model: as an example, other images of virtual biopsies with virtual contrast media and/or other data of interest for image classes, such as levels of tissue expression and or tissue functions of characteristics measured with other medical techniques, including homic methodologies, or factors that may have played a role in tissue formation and/or tissue functions). During these phases, several models are generated and validated (internally and externally) that respond to the task of classifying virtual biopsies into classes of interest and their performance is measured.

This passage could happen, as an example, modifying the previous equation progressively until arriving to the 13th and last step, that is (figure 2 - step 13), the identification of the best model and predictors).

It is therefore further provided a phase of choice of the best model and its predictors, on the basis of the comparison of the figures of merit of the predictive capabilities of the different classifier models obtained.

In the example above, the best model could have equation Y₁ = 1.16X₁ + 1.24X₂ + 0.86 could have internal AUC = 0.92 and external AUC = 0.88.

For each automatic predictive model generated, the method provides a data structure that includes, in particular,
- the model functions and parameters of the model functions that predicted the classes of interest of virtual biopsy images with virtual contrast media,
- figures of merit of the predictive capacity of the model,
- the list of contrast characteristics with greater predictivity identified by each model starting from the virtual biopsies with virtual contrast media, in figure 6e the characteristics C3, C4 and C5 have been illustrated as an example.

For each classified virtual biopsy image, the method provides a figure of merit of the probability that such image belongs to the class predicted by each model.

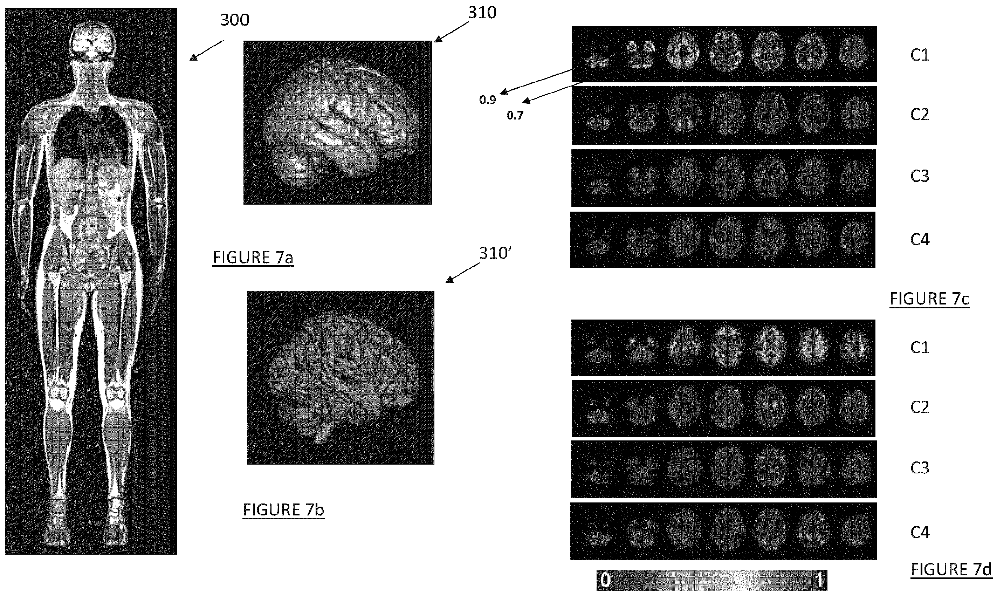

A further example is visible in figure 7a, in which is represented an original medical image 300 from which is extracted a first detail, or an original image of gray brain substance 310 and a second detail or an original image of white brain substance 310' (figure 7b), where these images are subjected to the steps of the invention method.

Similarly to the previous example, in figure 7c four different characteristics C1, C2, C3 and C4 are illustrated, exemplifying the grey brain matter 310 in figure 7a.

In particular, in the proposed example, in particular following a PCA, we have that:
Characteristic 1 - C1
PCA 1 = -87.12; ICC = 0.9
Characteristic 2 - C2
PCA 2 = 121.90; ICC = 0.4
Characteristic 3 - C3
PCA 3 = 14.56; ICC = 0.8
Characteristic 4 - C4
PCA 4 = -323.34; ICC = 0.6

In figure 7d four different characteristics C1, C2, C3 and C4 are illustrated, exemplifying the 310' white brain matter in figure 7b. In particular, in the proposed example, we have that:
Characteristic 1 - C1
PCA 1 = -163.47; ICC = 0.8
Characteristic 2 - C2
PCA 2 = 24.19; ICC = 0.5
Characteristic 3 - C3
PCA 3 = -7.94; ICC = 0.8
Characteristic 4 - C4
PCA 4 = 12.21; ICC = 0.8

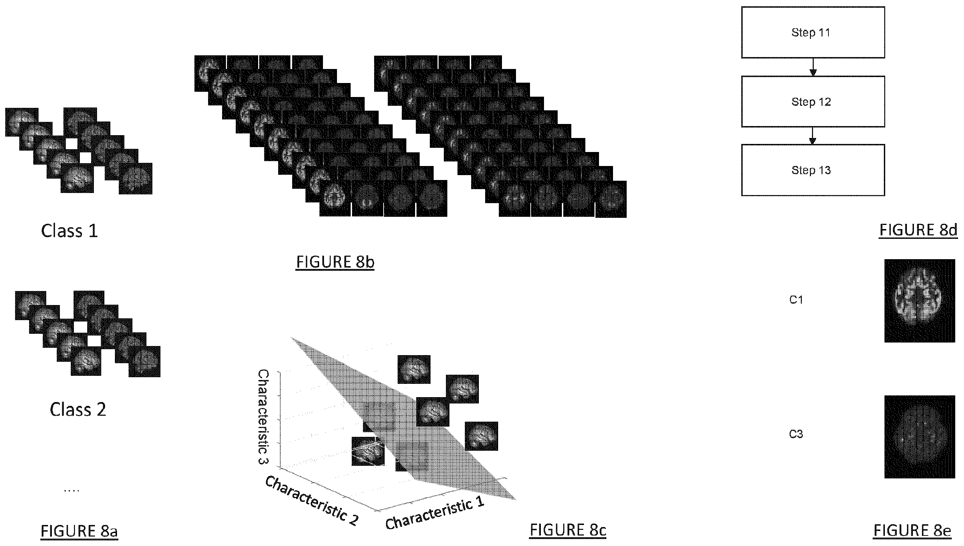

The method continues with the steps described for the previous case, i.e. Figure 8a illustrates the selection of two (or more) classes that can be carried out in supervised or unsupervised mode

Figure 8b shows schematically the association to each class of interest of a corresponding data structure containing the results of the analysis (expression levels) of virtual biopsies with virtual contrasts.

In figure 8c, a three-dimensional graph is represented that defines an abstract space determined by the values of the characteristics C1, C2 and C3.

For example a generated model could have equation y₁ = 1.21x₁ + 1.20x₂ + 0.85, where Y₁ represents characteristic 3, where X₁ represents characteristic 2 and X₂ represents characteristic 1.

These values are purely illustrative and not limiting the characteristics of the invention.

Figure 8d summarizes the following steps 11, 12 and 13 of the invention method, similar to those previously described.

Finally, Figure 8e summarizes the contrast characteristics with greater predictivity identified by this particular model starting from virtual biopsies with virtual contrast media that, as an example, are the C1 and C3 characteristics.

The method can be implemented as a computer system or a computer product, such as a software or software suite, recorded in a computer-readable storage device, or installed in a stand-alone or cloud platform or other platform, accessible both locally and remotely by means of appropriate hardware and software configuration and in accordance with national and international regulations governing the protection of personal data.

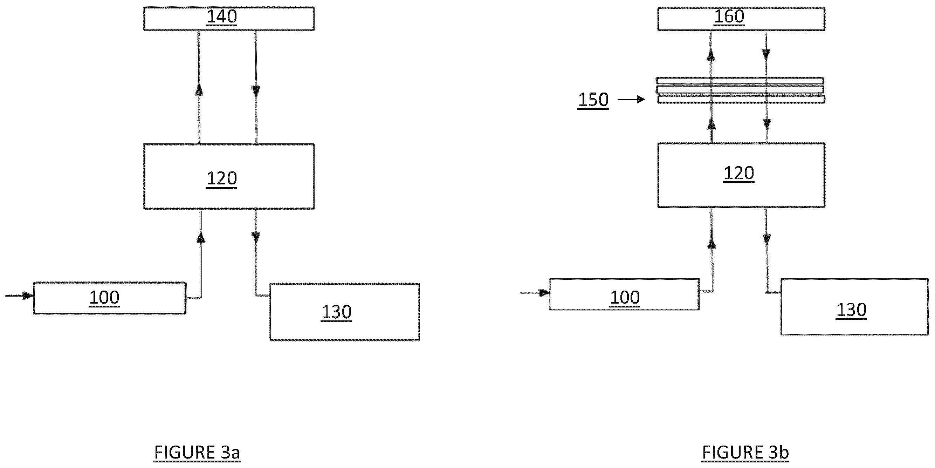

Examples of computer systems configured to implement the invention method are shown in Figures 3a and 3b.

Figure 3a illustrates an example of method implementation in a system using a local platform.

In this implementation, medical or veterinary images (block 100) are received and visible on a local user interface (block 120).

The representative data structures of these images are sent to an algorithm that works on a local hardware platform (block 140) and following this processing, which takes place in the manner described in this description, these images are processed and received as output in the form of virtual biopsies with virtual contrast media, in the manner described in this description (block 130).

Figure 3b shows an example of method implementation in a system using a cloud platform (block 150).

In this implementation, medical or veterinary images (block 100) are received and visible on a local user interface (block 120).

The representative data structures of these images are sent to an algorithm that works on remote hardware platforms (block 160) and as a result of this processing, these images are processed and received as output in the form of virtual biopsies with virtual contrast media, according to the modalities described in this description (block 130).

## Claims

1. A method for the generation of predictive models to automatically classify in at least one class of interest medical or veterinary images derived from original images, wherein said derivation is finalized to make detectable to a computer and to a human operator, predictive characteristics, implicitly present in the original images, not perceivable by the naked eye, making them visible and interpretable to the naked eye on images derived, wherein said method is implemented by means of computers or of computer networks and wherein said method includes at least the following steps:
- selection of at least one class of interest wherein the classes of interest characterize predictions of distinct phenotypes;
- construction of a database containing a plurality of data structures representative of derived medical or veterinary images, said data structures being generated by processing original medical or veterinary images, in order to extract portions of images representing tissue partitions or tissue functions,
wherein said data structures representative of derived medical or veterinary images are further processed by measuring levels of expression of characteristics implicitly present in the original and derived images that are not perceivable by the naked eye, said characteristics expressing local differences in the micro-architecture of the tissue or in the functional signal of the partitioned tissue, irregularities in the shape and anomalies in the size of the partitioned tissue or combinations or elaborations of these characteristics, so that they can be used as characteristics expressing the architectural, morphological and functional complexity of the tissue partitions, in order to characterize these tissue partitions or tissue functions and usable for surrogate of real biopsy;
- association to said classes of interest of said processed data structures;
- training of at least one predictive model using said data structures elaborated in such a way to train said model to classify each of said data structures in one or more of said classes of interest on the basis of the differences in the distribution of the levels of expression of characteristics measured in said data structures, wherein the statistically significant predictive characteristics of the model are the characteristics resulting from testing their probability of not being predictors identified by chance from the model,
wherein the processing step of the data structures representative of original medical or veterinary images finalized to making significant characteristics implicitly present in the original medical or veterinary images to make said derived images usable, includes at least the following phases:
- receive at least one original medical or veterinary image, wherein said original medical or veterinary image is represented by an original data structure in a standard medical or veterinary format;
- partition said image into classes of interest, said classes of interest being representative of different tissues or functions of tissues of body organs;
- generate from each of said classes of interest a corresponding derived data structure that can be stored in a standard medical or veterinary format, wherein the derived data structure contains data representative of tissue intensity values or function of the partitioned tissue;
- generate for each of said derived data structures a plurality of variants (N) by means of combined manipulations of the original data structure, representative of the original medical or veterinary image, and the derived data structure, processed in order to generate a second binary data structure, derived from the previous one, which defines the volume of the partition, obtained by setting to 1 the internal intensity values of the extracted partition and setting to zero the external intensity values, wherein said variants are generated by means of operations chosen between statistical elaborations, rotations, translations and rototranslations of the images, elastic and inelastic deformations of the volumes, the variants being generated by inducing variations in the intensity values of the original images similar to the variations obtained by acquiring the same image in repeated measurements under conditions of environmental perturbations, and variations in the volumes similar to the variations obtained by different image partitioning methods;
- measure, for each of the variants of the generated plurality of variants (N), corresponding levels of expression of the characteristics of the tissue or the function of the tissue expressing local differentiations in the micro-architecture of the tissue or in the functional signal of the tissue, irregularities in the shape and anomalies in the size of the tissue or combinations or elaborations of these characteristics;
- said measurement being made by extracting a plurality of statistical measurements from a co-occurrence matrix of the histogram of the image oriented gradients;
- assign to each measured characteristic a stability index, calculated as an intra-class correlation coefficient between the expression levels for that characteristic in the 1+N variants generated;
- generate a data structure finalized to make recognizable by the computer or by the network of computers statistically significant predictive characteristics implicitly present in the original images, by means of association of a numerical value to every stable characteristic having said stability index greater than a predetermined numerical value, said numerical value being representative of the level of intensity of expression of said characteristic.

2. The method according to claim 1, wherein among the characteristics that can be measured there are levels of signal intensity, statistical measurements obtained from their distributions, morphological measurements, statistical measurements obtained from the histogram of intensities, texture measurements obtained by statistical methods of the second order, measurements obtained by convolutions with Gabor filters or combinations of these techniques.

3. The method according to claim 1, wherein it is provided a measurement step of the characteristics extracted by filtering techniques using filters such as exponential, logarithmic, laplacian, gaussian or other filters and/or a measurement phase of characteristics extracted from convolutional neural networks or other machine learning and deep learning algorithms.

4. The method according to claim 1, wherein using said data structure, a plurality of derived medical or veterinary images are viewable and interpretable by a human operator with color scale highlighting each of the statistically significant predictive characteristics implicitly present in the original medical or veterinary image not perceivable by the naked eye.

## Patentansprüche

1. Verfahren zur Erzeugung prädiktiver Modelle zur automatischen Klassifizierung von aus Originalbildern abgeleiteten medizinischen oder veterinärmedizinischen Bildern in mindestens eine Klasse von Interesse, wobei die Ableitung darauf ausgerichtet ist, prädiktive Merkmale, die in den Originalbildern implizit vorhanden und mit bloßem Auge nicht wahrnehmbar sind, für einen Computer und für einen menschlichen Bediener erkennbar zu machen, indem sie auf abgeleiteten Bildern mit bloßem Auge sichtbar und interpretierbar gemacht werden, wobei das Verfahren mittels Computern oder Computernetzwerken durchgeführt wird und wobei das Verfahren mindestens die folgenden Schritte umfasst:
- Auswahl mindestens einer Klasse von Interesse, wobei die Klassen von Interesse Vorhersagen unterschiedlicher Phänotypen charakterisieren;
- Aufbau einer Datenbank, die eine Vielzahl von Datenstrukturen enthält, die für abgeleitete medizinische oder veterinärmedizinische Bilder repräsentativ sind, wobei die Datenstrukturen durch Verarbeitung medizinischer oder veterinärmedizinischer Originalbilder erzeugt werden, um Bildabschnitte zu extrahieren, die Gewebepartitionen oder Gewebefunktionen darstellen, wobei die für abgeleitete medizinische oder veterinärmedizinische Bilder repräsentativen Datenstrukturen weiterverarbeitet werden, indem Ausprägungsgrade von Merkmalen gemessen werden, die in den Original- und abgeleiteten Bildern implizit vorhanden und mit bloßem Auge nicht wahrnehmbar sind, wobei die Merkmale lokale Unterschiede in der Mikroarchitektur des Gewebes oder im funktionellen Signal des partitionierten Gewebes, Unregelmäßigkeiten in der Form und Anomalien in der Größe des partitionierten Gewebes oder Kombinationen oder Weiterverarbeitungen dieser Merkmale ausdrücken, sodass sie als Merkmale verwendet werden können, welche die architektonische, morphologische und funktionelle Komplexität der Gewebepartitionen ausdrücken, um diese Gewebepartitionen oder Gewebefunktionen zu charakterisieren, und als Surrogat einer realen Biopsie verwendbar sind;
- Zuordnung der verarbeiteten Datenstrukturen zu den Klassen von Interesse;
- Trainieren mindestens eines prädiktiven Modells unter Verwendung der Datenstrukturen, die derart verarbeitet sind, dass das Modell dazu trainiert wird, jede der Datenstrukturen auf Grundlage der Unterschiede in der Verteilung der in den Datenstrukturen gemessenen Ausprägungsgrade von Merkmalen in eine oder mehrere der Klassen von Interesse zu klassifizieren, wobei die statistisch signifikanten prädiktiven Merkmale des Modells diejenigen Merkmale sind, die sich aus dem Testen ihrer Wahrscheinlichkeit ergeben, keine vom Modell zufällig identifizierten Prädiktoren zu sein,
wobei der Schritt der Verarbeitung der für medizinische oder veterinärmedizinische Originalbilder repräsentativen Datenstrukturen, der darauf ausgerichtet ist, in den medizinischen oder veterinärmedizinischen Originalbildern implizit vorhandene signifikante Merkmale nutzbar zu machen, um die abgeleiteten Bilder verwendbar zu machen, mindestens die folgenden Phasen umfasst:
- Empfangen mindestens eines medizinischen oder veterinärmedizinischen Originalbildes, wobei das medizinische oder veterinärmedizinische Originalbild durch eine Original-Datenstruktur in einem medizinischen oder veterinärmedizinischen Standardformat dargestellt wird;
- Partitionieren des Bildes in Klassen von Interesse, wobei die Klassen von Interesse für unterschiedliche Gewebe oder Funktionen von Geweben von Körperorganen repräsentativ sind;
- Erzeugen einer entsprechenden abgeleiteten Datenstruktur aus jeder der Klassen von Interesse, die in einem medizinischen oder veterinärmedizinischen Standardformat gespeichert werden kann, wobei die abgeleitete Datenstruktur Daten enthält, die für Gewebeintensitätswerte oder die Funktion des partitionierten Gewebes repräsentativ sind;
- Erzeugen einer Vielzahl von Varianten (N) für jede der abgeleiteten Datenstrukturen mittels kombinierter Manipulationen der Original-Datenstruktur, die für das medizinische oder veterinärmedizinische Originalbild repräsentativ ist, und der abgeleiteten Datenstruktur, die verarbeitet wird, um eine zweite, von der vorherigen abgeleitete binäre Datenstruktur zu erzeugen, die das Volumen der Partition definiert und die erhalten wird, indem die inneren Intensitätswerte der extrahierten Partition auf 1 und die äußeren Intensitätswerte auf null gesetzt werden, wobei die Varianten mittels Operationen erzeugt werden, die ausgewählt sind aus statistischen Weiterverarbeitungen, Rotationen, Translationen und Rototranslationen der Bilder, elastischen und inelastischen Verformungen der Volumina, wobei die Varianten erzeugt werden, indem Variationen in den Intensitätswerten der Originalbilder, die den Variationen ähnlich sind, die beim Erfassen desselben Bildes in wiederholten Messungen unter Bedingungen von Umgebungsstörungen erhalten werden, und Variationen in den Volumina, die den durch unterschiedliche Bildpartitionierungsverfahren erhaltenen Variationen ähnlich sind, induziert werden;
- Messen entsprechender Ausprägungsgrade der Merkmale des Gewebes oder der Funktion des Gewebes für jede der Varianten der erzeugten Vielzahl von Varianten (N), die lokale Differenzierungen in der Mikroarchitektur des Gewebes oder im funktionellen Signal des Gewebes, Unregelmäßigkeiten in der Form und Anomalien in der Größe des Gewebes oder Kombinationen oder Weiterverarbeitungen dieser Merkmale ausdrücken;
- wobei die Messung durch Extrahieren einer Vielzahl statistischer Messwerte aus einer Kookkurrenzmatrix des Histogramms der orientierten Bildgradienten erfolgt;
- Zuweisen eines Stabilitätsindex zu jedem gemessenen Merkmal, der als Intraklassen-Korrelationskoeffizient zwischen den Ausprägungsgraden für dieses Merkmal in den 1+N erzeugten Varianten berechnet wird;
- Erzeugen einer Datenstruktur, die darauf ausgerichtet ist, statistisch signifikante prädiktive Merkmale, die in den Originalbildern implizit vorhanden sind, für den Computer oder das Computernetzwerk erkennbar zu machen, mittels Zuordnung eines Zahlenwerts zu jedem stabilen Merkmal, dessen Stabilitätsindex größer als ein vorbestimmter Zahlenwert ist, wobei der Zahlenwert für den Intensitätsgrad der Ausprägung des Merkmals repräsentativ ist.

2. Verfahren nach Anspruch 1, wobei zu den messbaren Merkmalen Signalintensitätsniveaus, aus deren Verteilungen gewonnene statistische Messwerte, morphologische Messwerte, aus dem Intensitätshistogramm gewonnene statistische Messwerte, mittels statistischer Methoden zweiter Ordnung gewonnene Texturmesswerte, durch Faltungen mit Gabor-Filtern gewonnene Messwerte oder Kombinationen dieser Techniken gehören.

3. Verfahren nach Anspruch 1, wobei ein Schritt des Messens der Merkmale, die durch Filtertechniken unter Verwendung von Filtern wie exponentiellen, logarithmischen, Laplace-, Gauß- oder anderen Filtern extrahiert werden, und/oder eine Phase des Messens von Merkmalen, die aus faltenden neuronalen Netzen oder anderen Algorithmen des maschinellen Lernens und des Deep Learning extrahiert werden, vorgesehen ist.

4. Verfahren nach Anspruch 1, wobei unter Verwendung der Datenstruktur eine Vielzahl abgeleiteter medizinischer oder veterinärmedizinischer Bilder für einen menschlichen Bediener mit einer Farbskala betrachtbar und interpretierbar ist, die jedes der statistisch signifikanten prädiktiven Merkmale hervorhebt, die in dem medizinischen oder veterinärmedizinischen Originalbild implizit vorhanden und mit bloßem Auge nicht wahrnehmbar sind.

## Revendications

1. Procédé de génération de modèles prédictifs destinés à classer automatiquement, dans au moins une classe d'intérêt, des images médicales ou vétérinaires dérivées d'images originales, dans lequel ladite dérivation vise à rendre détectables par un ordinateur et par un opérateur humain des caractéristiques prédictives, implicitement présentes dans les images originales et non perceptibles à l'œil nu, en les rendant visibles et interprétables à l'œil nu sur les images dérivées, dans lequel ledit procédé est mis en œuvre au moyen d'ordinateurs ou de réseaux d'ordinateurs et dans lequel ledit procédé comprend au moins les étapes suivantes:
- sélectionner au moins une classe d'intérêt, les classes d'intérêt caractérisant des prédictions de phénotypes distincts;
- construire une base de données contenant une pluralité de structures de données représentatives d'images médicales ou vétérinaires dérivées, lesdites structures de données étant générées par traitement d'images médicales ou vétérinaires originales afin d'extraire des portions d'images représentant des partitions de tissu ou des fonctions tissulaires,
dans lequel lesdites structures de données représentatives d'images médicales ou vétérinaires dérivées sont en outre traitées en mesurant des niveaux d'expression de caractéristiques implicitement présentes dans les images originales et dérivées et non perceptibles à l'œil nu, lesdites caractéristiques exprimant des différences locales dans la microarchitecture du tissu ou dans le signal fonctionnel du tissu partitionné, des irrégularités de forme et des anomalies de taille du tissu partitionné, ou des combinaisons ou des élaborations de ces caractéristiques, de manière à pouvoir être utilisées en tant que caractéristiques exprimant la complexité architecturale, morphologique et fonctionnelle des partitions de tissu, afin de caractériser ces partitions de tissu ou ces fonctions tissulaires et de pouvoir être utilisées comme substitut à une biopsie réelle;
- associer lesdites structures de données traitées auxdites classes d'intérêt;
- entraîner au moins un modèle prédictif à l'aide desdites structures de données élaborées de manière à entraîner ledit modèle à classer chacune desdites structures de données dans une ou plusieurs desdites classes d'intérêt sur la base des différences dans la distribution des niveaux d'expression des caractéristiques mesurées dans lesdites structures de données, dans lequel les caractéristiques prédictives statistiquement significatives du modèle sont les caractéristiques résultant d'un test de leur probabilité de ne pas être des prédicteurs identifiés par hasard par le modèle,
dans lequel l'étape de traitement des structures de données représentatives des images médicales ou vétérinaires originales, visant à rendre significatives des caractéristiques implicitement présentes dans les images médicales ou vétérinaires originales afin de rendre utilisables lesdites images dérivées, comprend au moins les phases suivantes:
- recevoir au moins une image médicale ou vétérinaire originale, dans lequel ladite image médicale ou vétérinaire originale est représentée par une structure de données originale dans un format médical ou vétérinaire standard;
- partitionner ladite image en classes d'intérêt, lesdites classes d'intérêt étant représentatives de différents tissus ou de différentes fonctions de tissus d'organes corporels;
- générer, à partir de chacune desdites classes d'intérêt, une structure de données dérivée correspondante pouvant être stockée dans un format médical ou vétérinaire standard, dans lequel la structure de données dérivée contient des données représentatives de valeurs d'intensité du tissu ou de la fonction du tissu partitionné;
- générer, pour chacune desdites structures de données dérivées, une pluralité de variantes (N) au moyen de manipulations combinées de la structure de données originale, représentative de l'image médicale ou vétérinaire originale, et de la structure de données dérivée, traitée afin de générer une seconde structure de données binaire, dérivée de la précédente, qui définit le volume de la partition, obtenue en fixant à 1 les valeurs d'intensité internes de la partition extraite et en fixant à zéro les valeurs d'intensité externes, dans lequel lesdites variantes sont générées au moyen d'opérations choisies parmi des traitements statistiques, des rotations, des translations et des rototranslations des images, des déformations élastiques et inélastiques des volumes, les variantes étant générées en induisant des variations des valeurs d'intensité des images originales similaires aux variations obtenues lors de l'acquisition de la même image au cours de mesures répétées dans des conditions de perturbations environnementales, ainsi que des variations des volumes similaires aux variations obtenues au moyen de différents procédés de partitionnement d'images;
- mesurer, pour chacune des variantes de la pluralité de variantes (N) générée, des niveaux d'expression correspondants des caractéristiques du tissu ou de la fonction du tissu exprimant des différenciations locales dans la microarchitecture du tissu ou dans le signal fonctionnel du tissu, des irrégularités de forme et des anomalies de taille du tissu, ou des combinaisons ou des élaborations de ces caractéristiques;
- effectuer ladite mesure en extrayant une pluralité de mesures statistiques à partir d'une matrice de cooccurrence de l'histogramme des gradients orientés de l'image;
- attribuer à chaque caractéristique mesurée un indice de stabilité, calculé sous la forme d'un coefficient de corrélation intraclasse entre les niveaux d'expression de ladite caractéristique dans les 1+N variantes générées;
- générer une structure de données visant à rendre reconnaissables par l'ordinateur ou par le réseau d'ordinateurs des caractéristiques prédictives statistiquement significatives implicitement présentes dans les images originales, au moyen de l'association d'une valeur numérique à chaque caractéristique stable présentant ledit indice de stabilité supérieur à une valeur numérique prédéterminée, ladite valeur numérique étant représentative du niveau d'intensité d'expression de ladite caractéristique.

2. Procédé selon la revendication 1, dans lequel les caractéristiques pouvant être mesurées comprennent des niveaux d'intensité du signal, des mesures statistiques obtenues à partir de leurs distributions, des mesures morphologiques, des mesures statistiques obtenues à partir de l'histogramme des intensités, des mesures de texture obtenues par des méthodes statistiques du second ordre, des mesures obtenues par convolutions avec des filtres de Gabor, ou des combinaisons de ces techniques.

3. Procédé selon la revendication 1, dans lequel est prévue une étape de mesure des caractéristiques extraites par des techniques de filtrage utilisant des filtres tels que des filtres exponentiels, logarithmiques, laplaciens, gaussiens ou d'autres filtres, et/ou une étape de mesure de caractéristiques extraites à partir de réseaux neuronaux convolutifs ou d'autres algorithmes d'apprentissage automatique et d'apprentissage profond.

4. Procédé selon la revendication 1, dans lequel, à l'aide de ladite structure de données, une pluralité d'images médicales ou vétérinaires dérivées sont visualisables et interprétables par un opérateur humain au moyen d'une échelle de couleurs mettant en évidence chacune des caractéristiques prédictives statistiquement significatives implicitement présentes dans l'image médicale ou vétérinaire originale et non perceptibles à l'œil nu.
